(19) Europäisches Patentamt
European Patent Office
Office européen des brevets

(11) **EP 0 521 543 B1**

(12) **EUROPEAN PATENT SPECIFICATION**

(45) Date of publication and mention
of the grant of the patent:
**05.03.1997 Bulletin 1997/10**

(51) Int. Cl.$^6$: **A23P 1/16**, B01F 3/04

(21) Application number: **92201564.9**

(22) Date of filing: **02.06.1992**

(54) **Food product or cosmetic cream with gas cells in an aqueous medium**

Lebensmittel oder kosmetische Creme mit Gasbläschen in einem wässrigen Medium

Produit alimentaire ou crème cosmétique avec bulles de gaz en milieu aqueux

(84) Designated Contracting States:
**AT BE CH DE DK ES FR GB GR IT LI NL PT SE**

(30) Priority: **03.06.1991 GB 9111880**

(43) Date of publication of application:
**07.01.1993 Bulletin 1993/01**

(73) Proprietors:
• **UNILEVER N.V.**
**NL-3000 DK Rotterdam (NL)**
Designated Contracting States:
**BE CH DE DK ES FR GR IT LI NL PT SE AT**
• **UNILEVER PLC**
**London EC4P 4BQ (GB)**
Designated Contracting States:
**GB**

(72) Inventor: **Bee, Rodney David**
**Sharnbrook, Bedford MK44 1LQ (GB)**

(74) Representative: **Kirsch, Susan Edith et al**
**Unilever plc,**
**Patent Division,**
**Colworth House**
**Sharnbrook, Bedford MK44 1LQ (GB)**

(56) References cited:
**EP-A- 0 246 197**          **EP-A- 0 274 348**
**EP-A- 0 359 246**          **WO-A-92/05806**
**GB-A- 2 057 848**          **US-A- 3 682 656**
**US-A- 4 012 533**          **US-A- 4 450 182**
**US-A- 4 637 937**

• **DATABASE WPIL Week 8326, Derwent**
**Publications Ltd., London, GB; AN 83-62702K &**
**JP-A-58 086 056 (RIKEN VITAMIN CO KK) 23 May**
**1983**
• **DATABASE WPI Week 7431, Derwent**
**Publications Ltd., London, GB; AN 74-55758V &**
**JP-A-49 015 684 (H. MORI) 12 February 1974**

## Description

Many products, such as foods or cosmetic creams are aerated. The gas phase may be introduced in order to provide a specific textural character, such as brittleness in confectionery, lightness in whipped cream, scoopability in ice-cream, or opacity of cosmetics. Alternatively, the gas phase may function as a structuring element in part of a cooking process, as with "creamed" margarines in cake baking, or the egg-based aerated structure in a meringue or soufflé. Though widely different in chemical composition, the aeration processes of these products have much in common. For example, each can be prepared by whipping with a simple mechanical whisk or beater, the initial stage being the incorporation of large gas cells, which are then broken down during whipping by the shear field of the whisk or beater blades. In each case, the process is known to be influenced to varying extents by several physical factors, of which the most important are normally taken to be the rheological properties and the interfacial behaviour.

A problem encountered with many foam products is the stability with time: this is because a foam or gas cell dispersion comprising large cells is vulnerable to creaming separation of the dispersion into discrete layers of different gas phase volume, the larger cells in the high gas phase volume layer will coalesce through film rupture, while the smaller gas cells, say under 100 μm, are unstable with time, due to disproportionation in favour of larger cells and this is in particular true if the gas cells become finer.

EP 359 246 discloses the preparation of an ultrasonic imaging agent of the human body for diagnostic purposes comprising microbubbles.

WO 92/05806 discloses a method for preparing suspensions suitable for ultrasonic echography, said suspensions comprising small foam bubbles.

EP 274 348 discloses the production of a dietary foam comprising a stable dispersion of air or gasbubbles.

US 3 682 656 discloses small gas-cells in fat-continuous food products.

In practice there is a need for stable foamy food products and cosmetic creams with stable gas cells. Surprisingly a foam comprising gas cells dispersed in a continuous liquid aqueous medium could be obtained in a stable condition, i.e. a foam having a stability in excess of two weeks, the gas cells of which foam having a measured D3,2 average diameter of less than 10 μm and the gas phase volume of which foam being in excess of 0.0001. Although the gas cells of the foam may appear in different embodiments in a characteristic appearance the boundary surface, i.e. the surface separating the gas of each cell and the liquid medium, is structured and comprises a multitude of adjacent domes. Specific stability is obtained if the great majority of the domes has hexagonal and some pentagonal outlines. Usually some irregularities, e.g. higher polygons are present amongst the domed structures. These polygons may be of very irregular shape.

Gas cells of a good stability with respect to creaming and disproportionation can be obtained when the cells have diameters in the range from 0.1 to 20 μm and more preferably from 0.5 to 3 μm.

Diameter throughout this description and claims refers to a measured D 3,2 (volume surface) average diameter.

The expression "liquid medium" in this description and claims comprises any medium showing molecule mobility, i.e. including gels and viscous liquids but definitely not glasses.

A suitable method of preparing a multitude of gas cells in a liquid aqueous medium comprises whipping a liquid aqueous medium with a gas such that gas cells of the required dimension are formed while having a surface active agent contained in that liquid medium for stabilising the gas cells. For obtaining the gas cells of the required dimensions sufficient shear should be exerted on the larger gas cells that initially are formed. Factors influencing this shear are the type of mixer or beater or whisk, the viscosity of the liquid medium and the temperature thereof. In practice a high shear mixer, e.g. a Kenwood Chef mixer, a colloid mill, an Oakes mixer, a cavity transfer mixer or a Silverson will be used. By increasing the viscosity and/or lowering the temperature of the liquid medium the size reducing effect of the mixer on the gas cells is increased. If a Kenwood Chef mixer is used at room temperature a suitable dynamic viscosity of the liquid medium is from 0.1 Pa s to 20 Pa s although the range of from 0.2 to 0.4 Pa s is preferred.

Having obtained the stable gas cells in the form of a thick creamy foam these gas cells may then be separated from the liquid medium used for preparing the cells. Separation may be done by centrifuging or using a dialysis membrane after modifying the liquid phase of the gas cell suspension such as by dilution with a miscible fluid.

The invention will be explained in the following description of some presently preferred embodiments. The figures show some electron micrographs of domed and differently structured gas cells according to the invention, each made at a different magnification factor.

### Example 1

An aqueous solution was prepared containing 70% by wt of maltodextrin 63DE and 2% by wt of sucrose mono stearate ester. Using a Kenwood chef mixer this solution was whipped with air for 1 hour at speed 5. A thick creamy foam resulted.

This foam showed an air phase volume of 0.6 and the great majority of the gas cells has a diameter of the order of 2μm and below. On standing for 40 days little visible change had occurred.

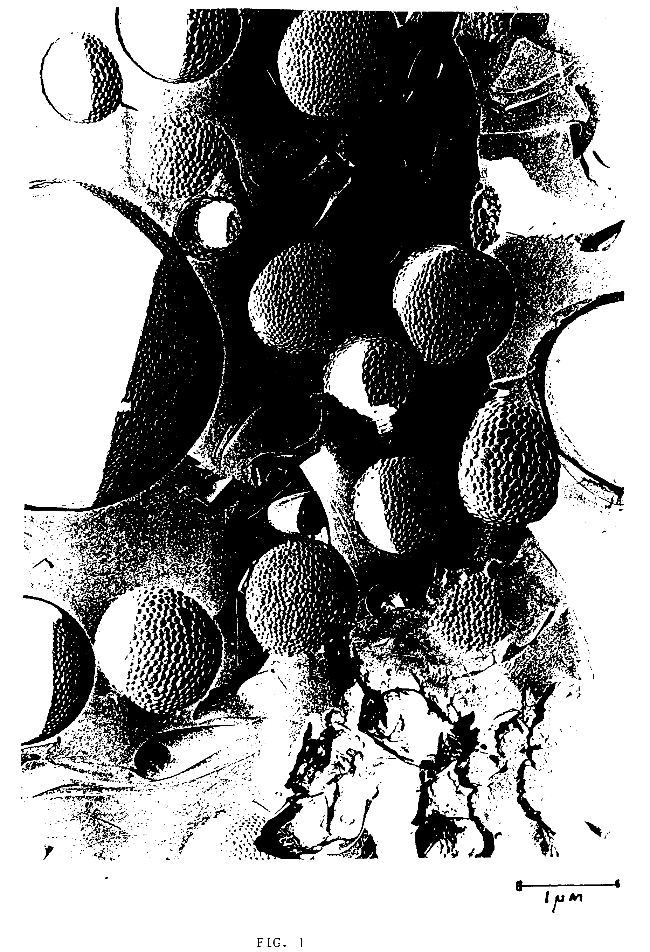

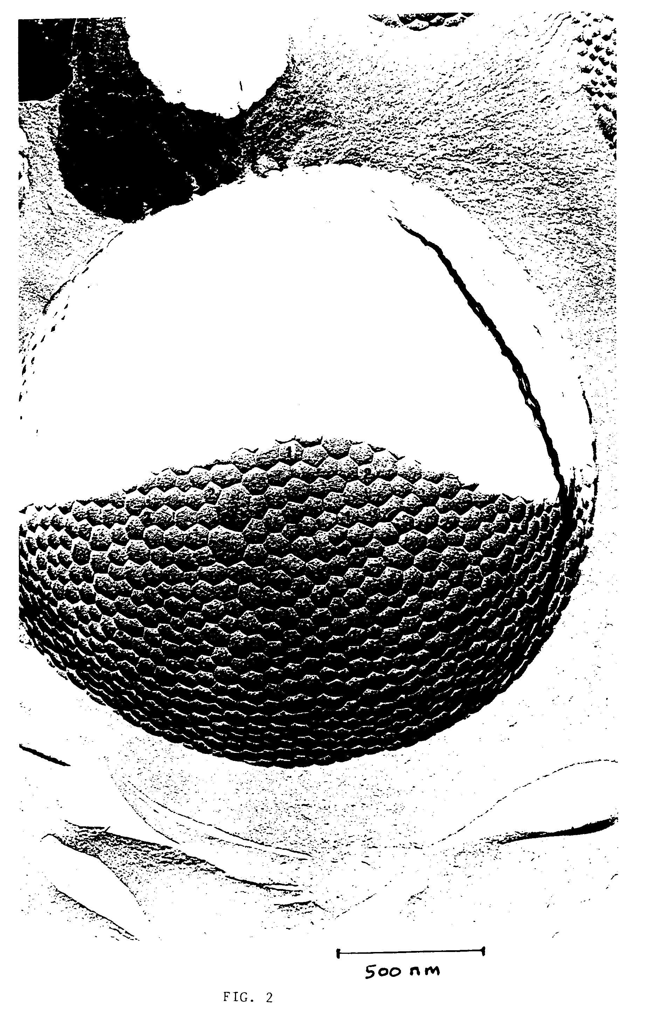

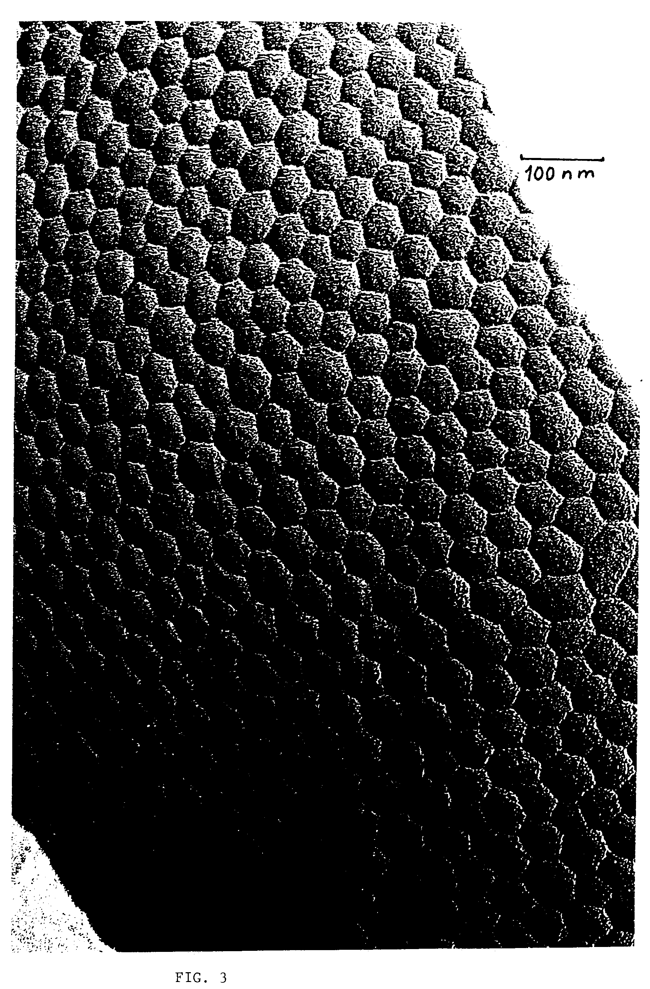

Electron microscopy photographs showed (see fig. 1 and 2) that the air cells had surfaces compartmentalised into domes, most of the domes having a hexagonal (1) and some a pentagonal (2) outline. Few showed a differently polygonal (3) outline. A representation showing part of a domed surface and made with the largest magnification factor is shown in fig. 3.

The foam as prepared could be diluted 1000 times with water resulting in a white milky liquid. The same result was obtained on 1000 times dilution with a 30% by wt aqueous maltodextrin 63DE solution. Though no longer suspended/dispersed in a thick viscous aqueous liquid the gas cells with diameters less than 5-10 $\mu$m remained in suspension, although with some creaming. This creaming could be reversed by simple stirring or swirling. No significant change took place over 20 days.

Even though some flocculation of cells occurred over extended times (normally greater than several days depending on ionic concentration) the cells remained essentially stable with respect to disproportionation. Flocculation did however cause an increase in the rate of creaming of the gas cell suspension. When not flocculated the cells smaller than 10 $\mu$m can be seen to be strongly under the influence of Brownian motion, showing that the stability of these cells does not result from the cells being constrained in a rigid matrix.

The gas cells could be concentrated again to a gas phase volume of 0.4 by centrifuging the diluted liquid in a centrifuge at a speed of 2500 rpm for 5 minutes.

As expected the rate of concentration of the gas cells by centrifugation could be manipulated by varying the viscosity of the suspending phase and by the magnitude of the applied gravitational force.

The thick foam prepared by the method just described was diluted with distilled water to air phase volumes $\phi$ of 0.1; 0.01 and 0.001 respectively. After standing for 14 days gas cell sizes determinations were made both with a Coulter Counter (aperture size 70$\mu$m) and a Malvern Zetasizer.

For the Coulter Counter determination samples of each of the three amounts of diluted foams were taken after gently shaking and these samples were diluted with distilled water to a dilution suitable for the determination.

The results were as follows:

| Phase volume $\phi$0.1 | | |
|---|---|---|
| size $\mu$m | vol. % | population (thousands) |
| <1.00 | 9.5 | 75 |
| 1.25 | 16.2 | 65.1 |
| 1.58 | 24.3 | 51.3 |
| 1.99 | 23.9 | 28.2 |
| 2.51 | 13.6 | 8.1 |
| 3.16 | 6.0 | 1.8 |
| 3.98 | 3.1 | 0.5 |
| 5.02 | 1.5 | 0.1 |
| 6.32 | 0.3 | 0 |
| 7.96 | 0.2 | 0 |
| 10.03 | 0.6 | 0 |
| 12.64 | 0.1 | 0 |
| 15.93 | 0 | 0 |
| | | total $\overline{230}$ |

| Phase volume φ0.01 | | | Phase volume φ0.001 | | |
|---|---|---|---|---|---|
| size µm | vol. % | popul. (thousands) | size µm | vol. % | popul. thousands) |
| <0.79 | - | - | <0.79 | - | - |
| 1.00 | 17.2 | 65.2 | 1.00 | 22.4 | 96 |
| 1.25 | 16.8 | 30.8 | 1.25 | 24.5 | 52.1 |
| 1.58 | 15.1 | 14.0 | 1.58 | 18.8 | 20.8 |
| 1.99 | 11.6 | 5.9 | 1.99 | 13.0 | 7.6 |
| 2.51 | 7.6 | 1.9 | 2.51 | 6.4 | 1.9 |
| 3.16 | 4.0 | 0.5 | 3.16 | 3.1 | 0.4 |
| 3.98 | 2.4 | 0.1 | 3.98 | 2.2 | 0.1 |
| 5.02 | 4.0 | 0.1 | 5.02 | 1.5 | 0.1 |
| 6.32 | 4.4 | 0.1 | 6.32 | 2.2 | 0 |
| 7.96 | 7.0 | 0 | 7.96 | 1.1 | 0 |
| 10.03 | 2.6 | 0 | 10.03 | 0 | 0 |
| | | total $\overline{119}$ | | | $\overline{179}$ |

A blank gas cell size determination of distilled water resulted in a total background count from particulate impurities of 600.

An amount of the original foam was diluted with distilled water to an air phase volume of 0.05 and dialysed against distilled water overnight to reduce the maltodextrin in the liquid phase.

After suitable dilution the following data were obtained for gas cell sizes and size distribution using a Malvern Zetasizer.

| gas cell size class nm | relative number of gas cells % |
|---|---|
| below 353.9 | 0.0 |
| 353.9- 414.6 | 0.8 |
| 414.6- 490.4 | 4.7 |
| 490.4- 577.2 | 10.8 |
| 577.2- 679.3 | 19.1 |
| 679.3- 799.6 | 27.7 |
| 799.6- 941.2 | 20.2 |
| 941.2-1107.8 | 10.8 |
| 1107.8-1303.9 | 4.7 |
| 1303.9-1534.8 | 1.1 |
| over 1534.8 | 0 |

The same dialysed sample, gently sonicated in an ultrasonic cleaning bath, was subjected to a particle size determination in a Malvern Zetasizer, giving the following data:

4

| gas cell size class nm | relative number of gas cells % |
|---|---|
| below 241.4 | 0 |
| 241.4- 278.1 | 1.2 |
| 278.1- 320.5 | 4.5 |
| 320.5- 369.3 | 8.6 |
| 369.3- 425.5 | 14.5 |
| 425.5- 490.3 | 20.4 |
| 490.3- 564.9 | 19.2 |
| 564.9- 650.9 | 15.1 |
| 650.9- 750.0 | 9.8 |
| 750.0- 864.2 | 5.1 |
| 864.2- 995.8 | 1.6 |
| over 995.8 | 0 |

These gas cells sizes and distributions are all confirming that the major amount of gas cells is well under 10μm size.

Example 2

An aqueous solution containing 1.5% (w/w) hydroxyethylcellulose and 6% (w/w) sucrose ester, S-1670 Ryoto Sugar Ester ex Mitsubishi Kasei Food Corporation, which is a mixture of predominantly sucrose mono and distearates was aerated in the bowl of a planetary mixer using a fine wire whisk. After 30 minutes the concentration of sucrose esters was increased by 2% by the addition of a more concentrated aqueous solution (25% w/w). Subsequent identical additions were made during whipping at 10 minute intervals until the sucrose ester concentration reached 12% w/w on the total. The overall viscosity of the aerated matrix was maintained approximately constant by the addition of an appropriate amount of water. Optionally gas cell suspensions prepared in this manner could be processed through a colloid mill to quickly remove the larger gas cells.

Two gas cell suspensions so formed were allowed to stand for 1 hour and subsequently for 1 day. After 100 fold dilutions of both samples no change could be recorded over time in the gas cell size distribution as measured by light microscopy. Observed in this was gas microcells had typical diameters in the range 1-10 μm. By light microscopy the microcells could be seen to be freely mobile both in the flowing liquid on the microscope slide and to be moving under the influence of Brownian motion. By increasing the surfactant concentration in this way an increased proportion of gas microcells relative to larger cells could be formed. After dilution to a viscosity which allowed removal of cells larger than the required size (in this case 20 μm) and separation by creaming the gas cell suspension had a phase volume of gas of ~0.4 and contained in the region of $10^9$ cells per ml. If required, excess surfactant could be removed by dialysis.

Gas microcells prepared in this way could be mixed with solutions containing a gelling or a viscosity imparting agent with appropriate yield strength properties to produce a suspension of known phase volume which is substantially stable to creaming of the cells. With suitable microbiological precautions the gas cell suspension remained unchanged over a period of many weeks.

Example 3

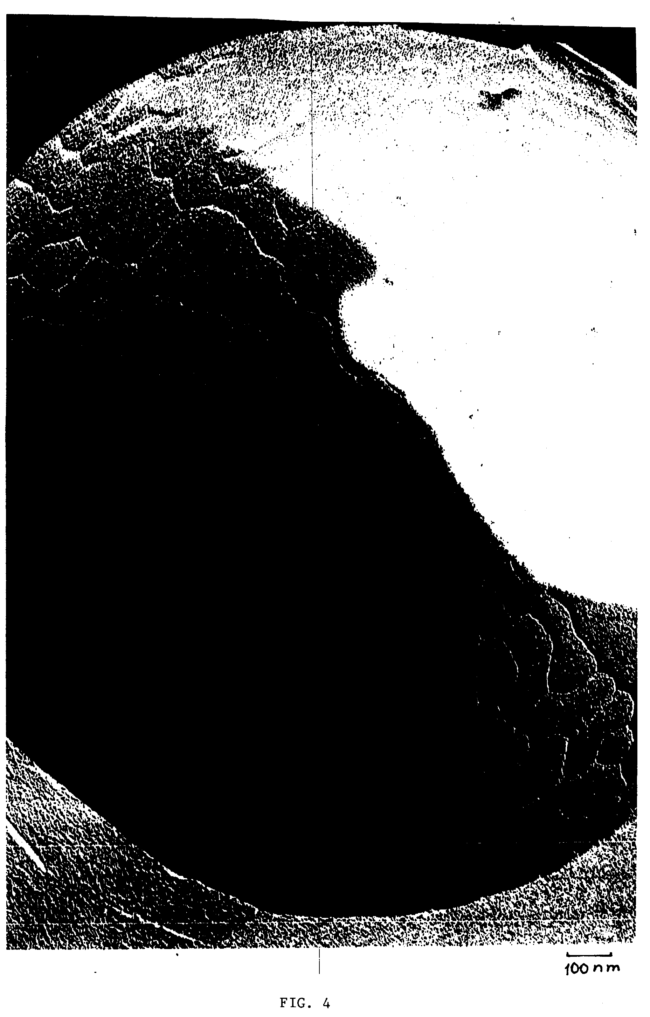

Gas microcells have been prepared using a mixture of two types of surfactants having different head group sizes but the same or very similar saturated hydrophobic chains. This example illustrates that microcells of substantial stability can be prepared by the addition of various amounts of co-surfactant(s) in which the characteristic surface dome features can be expanded such that the radius of the dome is modified to become more (or less) similar to that of the gas cell surface. This can be illustrated by transmission electron micrograph (Figure 4). The sample was prepared by the procedure of Example 1 but from a composition of surfactants of sucrose ester (1.3 w/v) and stearic acid (0.07% w/v). In such microcells the regular pattern is disturbed. Whilst the cell surface remains curved and separated into domains these are no longer regular. An otherwise identical preparation but this time containing 1.3% w/v sucrose ester and 0.7% stearic acid produced gas microcells containing essentially smooth surfaces with only a few lines or discontinuities separating the curved surfaces. Many cells showed no separate regions. After aging for 13 days and separation of the microcells by 10 times dilution and removal of the larger cells by creaming, the microcells, in two separate determinations of size distribution gave a D3,2 of 1.19 and 1.25 µm for the dispersion. Microcells in these examples showed stability characteristics analogous to those microcells described above.

Example 4

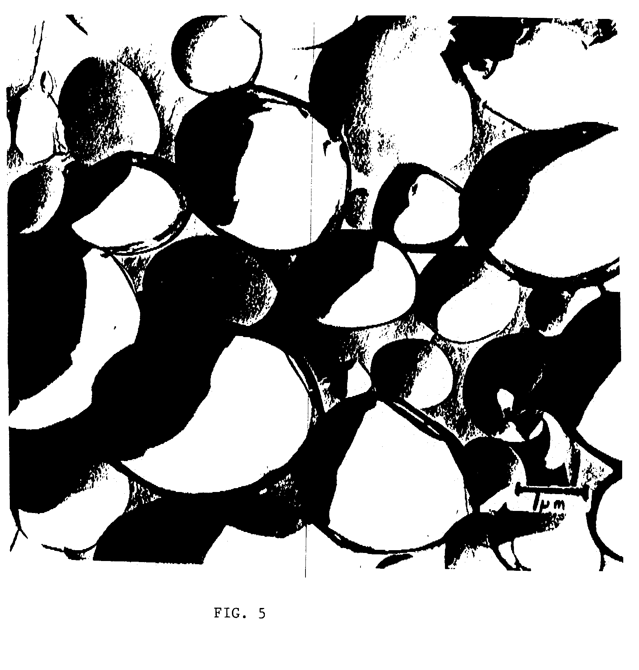

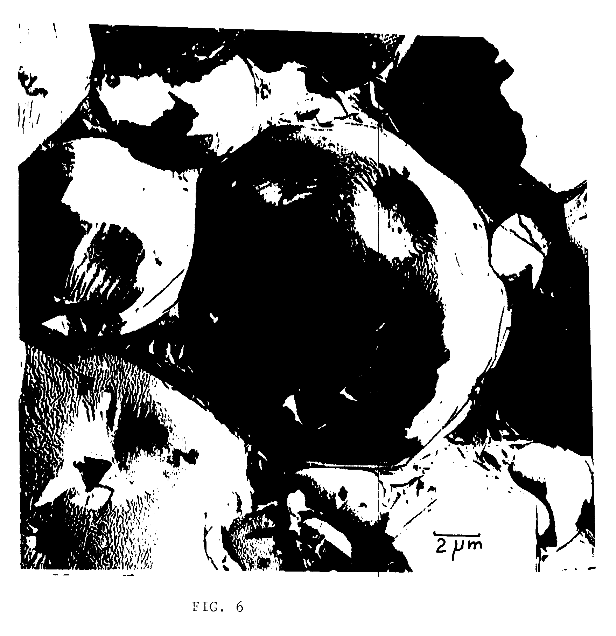

Defatted and fully hydrogenated phosphatidylcholine (PC) (98% pure and containing 1% lysophosphatidylcholine plus other phospholipids as impurities (Emulmetic 950 ex Lucas Meyer)) was used in a small scale preparation of gas microcells. 0.5 g PC was heated to 65°C in 10 g 60% maltodextrin solution. A homogenous dispersion was prepared by stirring whilst controlling the temperature for 1 hour. The suspension was aerated at room temperature for 1 hour using a microscale whipping apparatus comprising a cage of stainless steel wires driven by a variable speed motor. A phase volume of typically 0.7 was obtained in the initial aeration step. After aging for 24 hours the foam comprising microcells could be stripped of the larger cells by creaming. The microcells when viewed by transmission electron microscopy had surfaces characterised by the presence of waves or wrinkles (Figure 6) and frequently deviated substantially from an overall spherical (Figure 5). Cells in the range 1-20 µm could be harvested by standard separation techniques.

**Claims**

1. Food product or cosmetic cream comprising a foam comprising gas cells dispersed in a continuous liquid aqueous medium, characterised in that the foam has a stability in excess of 2 weeks, the gas cells have a measured D 3,2 average diameter of less than 10 µm and the gas phase volume is in excess of 0.0001.

2. Food product or cosmetic cream according to claim 1, the cells having a boundary surface comprise a multitude of adjacent domes.

3. Food product or cosmetic cream according to claim 1, the cells having a diameter ranging form 0.1 to 20 µm.

4. Food product or cosmetic cream according to claim 1, the cell 3, the cells having a diameter from 0.5 to 3 µm.

5. Food product or cosmetic cream according to claim 2, characterised in that the great majority of the domes has hexagonal and some pentagonal outlines.

**Patentansprüche**

1. Nahrungsmittelprodukt oder kosmetische Creme, umfassend einen Schaum, der Gaszellen umfaßt, die in einem kontinuierlichen flüssigen wässerigen Medium dispergiert sind, dadurch gekennzeichnet, daß der Schaum eine Stabilität von mehr als 2 Wochen hat, die Gaszellen einen gemessenen D 3,2 mittleren Durchmesser von weniger als 10 µm aufweisen und das Gasphasenvolumen mehr als 0,0001 beträgt.

2. Nahrungsmittelprodukt oder kosmetische Creme nach Anspruch 1, wobei die Zellen mit einer Grenzoberfläche eine Vielzahl von benachbarten Domen umfassen.

3. Nahrungsmittelprodukt oder kosmetische Creme nach Anspruch 1, wobei die Zellen einen Durchmesser im Bereich von 0,1 bis 20 µm aufweisen.

4. Nahrungsmittelprodukt oder kosmetische Creme nach Anspruch 1, wobei die Zellen einen Durchmesser von 0,5 bis 3 µm aufweisen.

5. Nahrungsmittelprodukt oder kosmetische Creme nach Anspruch 2, dadurch gekennzeichnet, daß die große Mehrheit der Domen hexagonale und einige pentagonale Umrisse haben.

**Revendications**

1. Produit alimentaire ou crème cosmétique consistant en une mousse comprenant des bulles gazeuses dispersées dans un milieu aqueux liquide continu, caractérisé en ce que la mousse a une stabilité en excès de 2 semaines, les bulles gazeuses ayant un diamètre moyen D 3,2 mesuré de moins de 10 µm et le volume de phase gazeuse est en excès de 0,0001.

**2.** Produit alimentaire ou crème cosmétique selon la revendication 1, les bulles ayant une surface frontière qui comprend une multitude de dômes adjacents.

**3.** Produit alimentaire ou crème cosmétique selon la revendication 1, les cellules ayant un diamètre dans la gamme de 0,1 à 20 µm.

**4.** Produit alimentaire ou crème cosmétique selon la revendication 1, les cellules ayant un diamètre de 0,5 à 3 µm.

**5.** Produit alimentaire ou crème cosmétique selon la revendication 2, caractérisé en ce que la grande majorité des dômes a des contours hexagonaux et certains ont des contours pentagonaux.

FIG. 1

500 nm

FIG. 2

100 nm

FIG. 3

FIG. 4

100 nm

FIG. 5

FIG. 6